# EUROPEAN PATENT APPLICATION

(11) **EP 1 014 277 A1**
(43) Date of publication of application: **28.06.2000**
(21) Application number: 99310174.0
(22) Date of filing: 17.12.1999
(51) Int. Cl.: G06F 17/27, G10L 15/00

(54) **Communication system and method employing automatic language identification**

(30) Priority: 22.12.1998 US 218773
(71) Applicant: NORTEL NETWORKS CORPORATION, Montreal, Quebec H2Y 3Y4 (CA)
(72) Inventor: Cohen, Martin S., Thornhill, Ontario L4J 2R5 (CA); Brennan, Paul M., Toronto (CA); Weiss, Richard A., McKinney, TX 75070 (US)
(74) Representative: Maury, Richard Philip

(57) **Abstract**

A method and systems for identifying the language(s) of a text or speech based communication by comparing an arbitrary segment within the communication with one or more language segments contained within at least one language database. Once language identification of the communication has been achieved, a user is provided with options for the subsequent processing and/or retrieval of the communication. User options include translation to one or more specified secondary languages and/or media conversion (e.g. text-to-speech or speech-to-text). The converted communication can be accessed through available media retrieval devices (e.g. telephone, facsimile, personal computer).

## Description

### FIELD OF THE INVENTION

The present invention is directed generally to the communications field, and more particularly, to communication systems and methods utilizing language identification.

### BACKGROUND OF THE INVENTION

The World Wide Web and the global economy have increased message quantity and variety to the point where many users are receiving messages in a multitude of languages. Users who receive messages in an unfamiliar language may need to have a message translated prior to being able to understand it. Furthermore, mobile individuals must retrieve and manage their messages from wherever they happen to be. Therefore, the ability to have a communication presented in a desired language and/or media type, regardless of the language and/or media type of the original or received communication, is desirable for modern day communication systems. A "communication" for purposes of this disclosure can be at least a text or speech-based document, record, recording, message (e.g., e-mail, voicemail, videomail, etc.), facsimile, video clip, or the like or any combination thereof, such as those commonly transmitted on, by, to, or through electronic communication systems, such as, multimedia communication systems like multimedia messaging systems. "Media" as used herein refers to the form of a communication, such as a text (as in the case of an email, certain facsimiles, or portions thereof, etc.), speech (as in the case of voicemail, the speech portion of a videomail or clip, recording, etc.), or the like.

Systems that provide language translation capabilities are generally available. For example, US 5,768,603 issued to Brown, et. al, June 16, 1998, and US 5,765,131 issued to Stentiford, et. al., June 9, 1998 are directed to language translation technology. In addition, today, multimedia message systems routinely provide text-to-speech conversion of e-mail messages to allow a user to hear their e-mail over the telephone. US 5,774,854 issued to Sharman, June 30, 1998, is directed to a text-to-speech (TTS) system. Speech-to-text technology is also available for the conversion of speech messages to text. US 5,724,410, issued to Parvulescu et al., March 3, 1998 teaches a method of speech-to-text conversion where the source language is already known.

The problem in utilizing traditional language translation technology in messaging systems, is that the original language (source language) of a message must be known prior to the processing (e.g., translation and/or media conversion, etc.) of that communication. This is especially true when the language of a message could be one of many. Some messaging protocols provide for message language "tagging" or labeling. However, even where a protocol supports a language tag, it may not be used appropriately in mixed-language applications. A single message may include multiple parts or sections in differing languages, whereas a protocol as generally provided in the art may only identify a single language.

### SUMMARY OF THE INVENTION

The present invention addresses the above needs, and in particular, the need for language identification by providing automatic language identification within communication systems such as multimedia communication systems like multimedia messaging systems. Furthermore, and in accordance with the present invention, such identification thereby enables and/or enhances subsequent processing (e.g., translation and/or media-type conversion, etc.) of language identified communications.

In accordance with the present invention there is provided a method for automatically identifying the languages of a communication by comparing one or more arbitrary segments of the communication with one or more segments for a plurality of languages. In accordance with further aspects of the invention, once the languages of the communication is/are recognized, the invention provides at least three options of processing the communication:

Translating the language identified of the communication into at least one different or secondary language using an appropriate translator;
Converting the language identified communication, as it exists in one media-type, directly into another media-type based on the identified language; or
Translating the language identified communication into at least one different or secondary language using an appropriate translator, and then converting the communication into another media-type.

In accordance with the present invention there is also provided an apparatus for automatically identifying the language(s) of a communication. Language identification is achieved by means of a multi-lingual language recognition module having access to one or more language databases for comparing one or more arbitrary segments of the communication with one or more segments for a plurality of languages. A translation module can be provided for language translation. The translation module can access the database(s) for use in carrying out language translation. The translation module can be instructed as to which language to use for translating a given communication into. Such instruction can be set within a system in the form of user preferences, or executed on the fly. The language of a particular communication is identified automatically, and this information can then be passed to the translation module. Media-to-media (e.g., text-to-speech or speech-to-text) conversion modules can also be provided for media conversion. Such modules could have access to the database(s) in order to facilitate conversions once appropriate language is identified.

### BRIEF DESCRIPTION OF THE DRAWINGS

These and other aspects of the present invention will become more evident upon reading the following detailed description in conjunction with the accompanying drawings, in which:

Figure 1 is a block diagram of a system incorporating a language identification module in accordance with the present invention.

Figure 2 is a flow diagram of a method in accordance with the present invention.

### DETAILED DESCRIPTION OF THE PREFERRED EMBODIMENTS

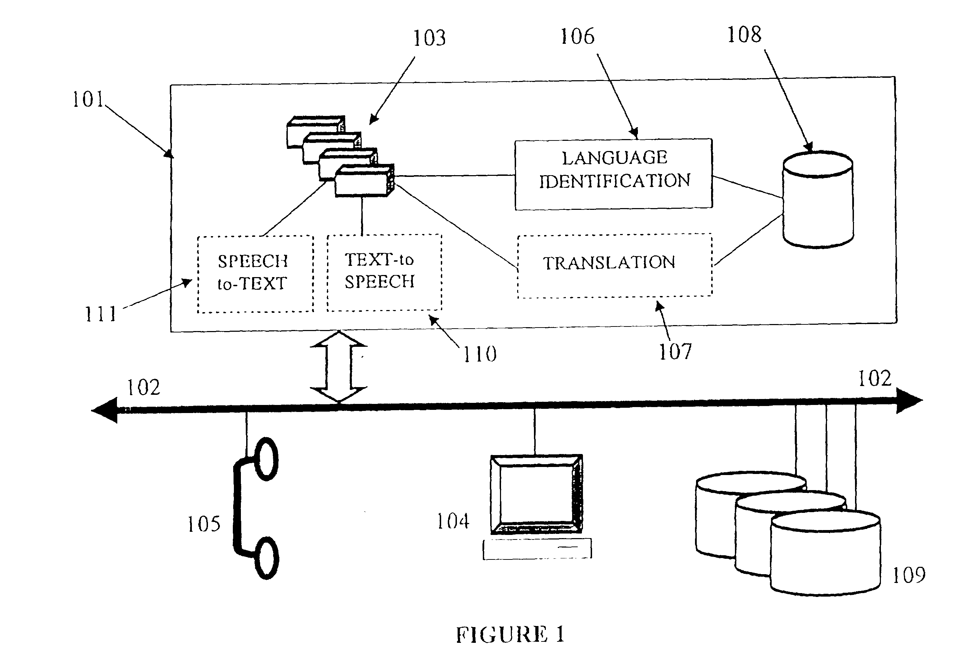

Referring to Figure 1, a block diagram of a system with language recognition 101 in accordance with the present invention is illustrated. The system can be, for example, a messaging system capable of processing at least voice and/or textual communications, and for purposes of this disclosure will be referred to as such.

Messaging system 101 is connected to a network 102 for the receipt and transmission of communications. Network 102 can be an internet, intranet, extranet, PSTN or any other communication network.

Messaging system 101 can access multiple mailboxes 103 that are assigned to specific users of the messaging system 101. User mailboxes 103 can be located on separate systems. For example, e-mail message storage resides on a server distinct from a voicemail system. Access to mailboxes 103 is provided to users by means known in the art, such as computers 104 or telephony equipment 105.

Pursuant to the present invention, a communication received by the messaging system 101 is analyzed by a language identification module 106 to determine its source language(s) by referral to language segments (such as text segments, speech samples, and/or any other type of communication segment) for a plurality of languages that are accessible from a database 108. The media type of the communication may dictate the type of language segments involved.

A database 108 containing the language segments may be resident to the system or accessible through the network 102. It may be necessary that a plurality of databases 109 be accessible by the messaging system 101 for the language identification module 106 to be able to determine the source language(s) of a communication (or for subsequent language translation or conversion purposes).

Language recognition/identification is achieved in the system by comparing arbitrary segments of a communication to language segments for a plurality of languages (segment comparison). Preferably, a segment of the communication of a particular media-type is compared with one or more language segments of the same media-type only. This need not be the case, however, since a comparison of text segments to speech samples or vice-a-versa will not result in a match. Use of similar media-type only reduces the quantity of searching required.

Use of a dictionary-type lookup (e.g., hash tables, look-up tables, etc.) to identify the most likely language of a segment is central to identification (and subsequent processing features (e.g., translation, conversion, etc.) of the system). Database-stored dictionaries should contain a suitable number of common entries to facilitate identification. A language database 108, or plurality of databases 109, is (are) suitably configured to optimize searching of each dictionary for any segment (or possibly portion thereof). Additional dictionaries may also be used to enhance the accuracy of language identification.

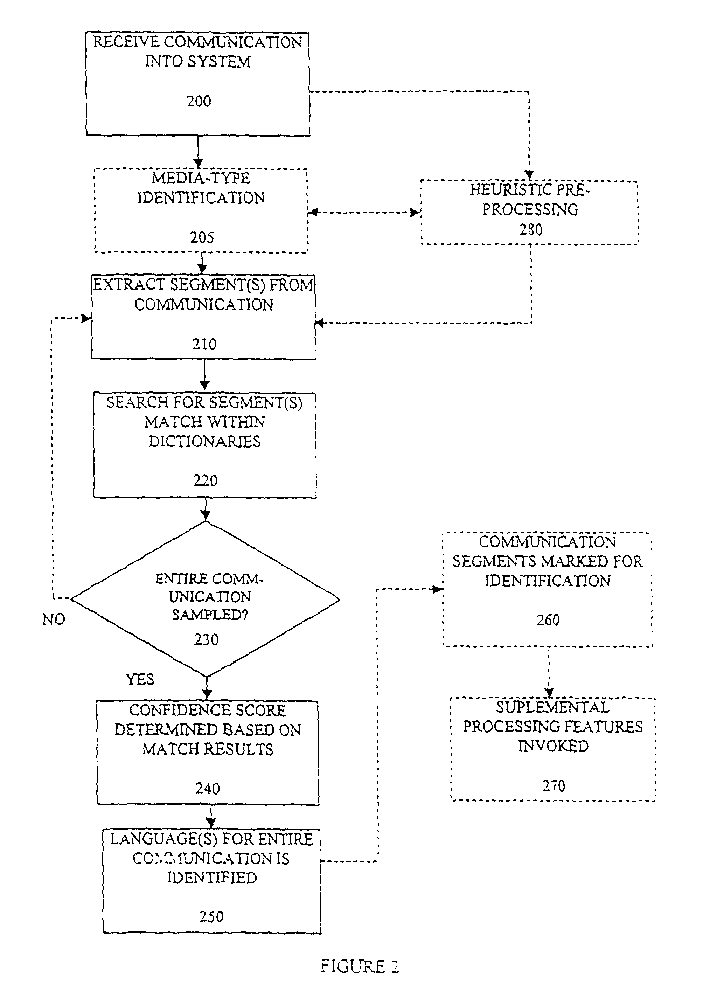

Referring to Figure 2, a block diagram of a method in accordance with the invention is shown. A messaging system will be used for example purposes only and should not be taken as a limitation on the type of communication system for which the method can apply.

In accordance with the invention, a communication is received by a communication system (e.g., messaging system) 200. If appropriate or necessary, the media-type of the communication is identified by means known in the art 205 (e.g., media-type identifiers transmitted within communication headers, based on the source (e.g., telephone, facsimile, computer, etc.)). It is possible that the communication system may only be utilized with speech only or text only communications, thereby eliminating the need to identify media-type.

Once the media-type is known or identified, as appropriate, language segment(s) 210 are extracted from the communication. A language segment can be made up of one or more text or speech (or etc.) words (e.g., words contained within lines or sentences contained within a communication) when text is involved, or phonemes (e.g., phonemes as combined to create a spoken word or words) when speech is involved. Extraction 210 of segment(s) from the communication can occur one at a time or all together.

For embodiments where segments are extracted 210 from the communication all together, appropriate dictionaries are searched 220 for language segments matching the extracted segments. Although segments from the communication could be searched randomly, it is preferred that segments are searched 220 systematically and/or sequentially. Segments are searched 220 within the language dictionaries until it is established that the entire communication has been processed 230.

For embodiments where segments are extracted 210 from the communication one at a time, each segment upon extraction is individually searched 220 via the dictionaries. The method would continue with extraction 210 and searching 220 until the entire document has been processed in this way and sampled 230 before proceeding to scoring 240. In Figure 2, a feedback loop is provided to the segment extraction step 210 from decision block 230 to show this. Again, it is preferred that searching of segments is conducted systematically and/or sequentially.

The outcome of the entire search(s) is scored 240 based on matching results for each individual segment to identify the most likely language or languages contained within the communication and for determining an associated confidence level(s) for the identification of the language(s). Scoring could involve counting the number of "hits" for each segment against all dictionaries until a suitable statistical confidence level is achieved. Applying a weighting factor to segments enhances recognition performance, because some segments may very clearly and uniquely identify a specific language and hence only a very few segments will require examination. Extracted segments can be passed through the search mechanism during recognition until a sufficiently high confidence level is attained. Heuristics may be applied to remove constructs that are unlikely to aid in identification (numerics, obvious abbreviations, etc.). It is by thoroughly sampling the entire communication 230, that it can be determined when an author of the communication may have changed languages.

Once the language(s) is/are identified 250, segments of the communication can be marked for identification 260 for further processing 270 (e.g., translation, conversion, archiving, transmission, rendering, etc.). A pre-processing step 280 may be used to apply heuristics that recognize specific prefix and suffix patterns. A set of common usage words can be used for identification purposes, along with their common prefixes and suffixes. Such data is suitably stored in, for example, hash tables to optimize searching. One or more hash tables may be used. Pre-processing may be implemented alone or concurrently with media-type identification, as shown in Figure 2.

After the language has been identified, the system may continue to look up each segment against its dictionary. Allowing for expected segment errors (e.g., misspellings in the case of text, mispronunciations in the case of speech, etc.), if the number of "misses" becomes excessive, language identification may be repeated to determine if another language is now more appropriate. Identification with the new language may begin at the point in the communication where the misses commenced. The new language may be applied, retroactively, to the beginning of, for example, a sentence or paragraph, or spoken sentence or phrase where the misses were noticed.

Referring again to Figure 1, in accordance with a further aspect of the present invention, a language translation module 107 can be provided for the translation of the communication (e.g., received message in a messaging system), and in particular, the segments contained therein from the identified source language into a secondary (foreign) language or languages. The translation module 107 accesses the database 108 and/or databases 109 during translation operations to enable such translation. US 5,768,603 and US 5,765,131, which are herein incorporated by reference, discuss examples of language translation which could be used by the present invention. The translation module 107 and database(s) 108/109 can accommodate translation nuances (e.g. language syntax and formation differences) based on the translation option (e.g., translating from Spanish to English).

Clearly, it is necessary for the language identification module to do more than simply identify the language of the communication for language translation applications. If more than one language has been found, the text must be partitioned into multiple segments and a language identifier applied to each. The translation module 107 can then process each part separately, utilizing the appropriate language "dictionary" for each independently identified segment.

In accordance with still another aspect of the present invention, a text-to-speech conversion module 110 can also be incorporated into the system 101 for use with text communications, to provide for conversion of the communication from text-to-speech. The text-to-speech module 110 can access the language database 108 or databases 109 to convert the communication into speech in the source or secondary language. The text-to-speech module 110 can convert the communication, either before or after being translated, into speech for retrieval by the recipient from the network 102. US 5,774,854, which is herein incorporated by reference, describes a method for performing text-to-speech conversion. The text-to-speech module 110 works with the language identification module 106 to identify the source language(s). This is necessary to know what language database(s) to use, and is done by reference to text segments contained within databases 108/109. The databases 108/109 will include a subset (i.e., text segments) of more than one language for the purposes of not only carrying out initial text language recognition, but also text-to-speech conversion.

In accordance with yet another aspect of the present invention, a speech-to-text conversion module 111 can be included in their system 101 for use with speech communications, to provide for conversion of the communication from speech to text. The speech-to-text module 111 can access the language database 108 or databases 109 to convert the communication into text in the source or secondary language. The speech-to-text module 111 can convert the communication, either before or after being translated, into text for retrieval by the recipient from the network 102. The speech-to-text module 111 works with the language identification module 106 to identify the source language(s). This is necessary to know what language database(s) to use, and is done by reference to speech segments (i.e., speech samples (e.g., phonemes)) contained within databases 108/109. The databases 108/109 will include a subset (i.e., speech samples) of more than one language for the purposes of not only carrying out initial speech language recognition, but also speech-to-text conversion.

Once in text form, the text communication can be accessed by the user in textual form from a desktop 104 (e.g., as e-mail) or translated by the translation module 107 into another language. After translation, the message can be then be accessed by the desktop 104 or converted back into a voice message utilizing the text-to-speech module conversion 110. If converted to speech, the message can be retrieved via telephony equipment 105 or computer 104 by accessing messaging mailboxes 103. US 5,724,410, which is herein incorporated by reference, teaches a method for two-way voice-messaging capable of speech-to-text conversion where the source language is already known.

Continued access to a database 108, or plurality of databases 109, of dictionaries for languages of interest is required for the execution and completion of translation module 107 and text-to-speech module 110 or speech-to-text module 111 operations. Once the language identity for a segment (or segments) within a communication has been identified, the language dictionary from appropriate databases can be used to efficiently carry out translation or conversion of a communication.

It should be appreciated that all the components of the recognition system are not required to be resident in a messaging system 101 as depicted in Figure 1. For example, the language identification module 106 and mailboxes 103 can be networked as the plurality of databases 109 are. It should also be appreciated that other media-type conversion modules can be integrated with the present system (e.g., Teletype for the Deaf and Disabled (TDD)-to-speech, to-text, vice-a-versa, etc.)

The above-described system can be implemented as processor-driven software designed to compare an arbitrary language segment from a communication against segments for a plurality of languages stored in at least one database in order to achieve a linguistic match, and thereby identify the communication as being of particular source language. The communication could then be translated into another language or converted from text into speech or speech into text in the identified language, prior to retrieval by a recipient. Translating the communication from the source language into selected secondary languages or conversion from one media-type to another is conducted by providing the computer with access to source/initial media-type and corresponding secondary/media-type language segments from a database.

In general, the invention may be applied to any communication that is processed by any communication system. Any emphasis placed upon multimedia messaging systems or messages, such as e-mail or voice-mail, pertains only to one particular embodiment of the invention.

It should be appreciated that a communication can be converted from one media type (e.g., speech-to-text) to another prior to translation, and subsequent to such translation, converted back to the original media type (e.g., text-to-speech).

It should be appreciated that a recognized communication can be played back in speech form on a desktop. Such a capability would be every useful, for example, in assisting the reading disabled. It should also be understood that generated speech could be stored on a disk as a file or mail message, or as an attachment to a mail message and so on. A user could then listen to speech at a later time, or even send the audio speech to other persons that may not have access to the original communication, or translation/conversion facilities. For example, a message in a multiplicity of secondary languages can be sent to others within a multipart/alternative e-mail encapsulation. An appropriately equipped desktop 104 could then automatically play the document in the user's language of choice.

It should also be appreciated that text forms of a text or speech communication can be transmitted via facsimile. A such, this will enable a communication which was originally received by a communication system in accordance with the invention, regardless of where it originated from or in what language to be retrieved via a facsimile device subsequent to translation and/or conversion.

While various embodiments of the present invention have been described above, it should be understood that they have been presented by way of example, and not limitation. Thus the breadth and scope of the present invention should not be limited by any of the above-described exemplary embodiments.

## Claims

1. A communication system, comprising a language identification module for automatically identifying a source language of at least one arbitrary segment of a communication by comparing said arbitrary segment to one or more language segments for a plurality of languages.

2. The system of claim 1, further comprising a translation module for translating said communication from said source language to at least one secondary language.

3. The system of claim 1 wherein said communication is in text form, and said system further comprises a text-to-speech module for converting said communication to speech form based on said source language.

4. The system of claim 2 wherein said communication is in text form, and said system further comprises a text-to-speech module for converting said communication to speech form after being translated into said at least one secondary language.

5. The system of claim 1 wherein said communication is in speech form, and said system further comprises a speech-to-text module for converting said communication into text form based on said source language.

6. The system of claim 2 wherein said communication is in speech form, and said system further comprises a speech-to-text module for converting said communication into text form after being translated into said at least one secondary language.

7. The communication system of claim 1, further comprising at least one database containing language segments for at least one language, wherein said identification module accesses said at least one database during said identifying.

8. The communication system of claim 1, wherein said system is a messaging system.

9. The communication system of claim 8, wherein said communication is a text message, and said system further comprises a text-to-speech module for converting said text message into speech form.

10. The system of claim 8, wherein said communication is a voice message, and said system further comprises a speech-to-text module for converting said voice message into text form.

11. The system of claim 8,9 or 10 wherein said communication is accessible via a personal computer, a facsimile apparatus, a TDD, or a telephony apparatus.

12. The system of any preceding claim, wherein the identification module determines said source language by scoring results of said comparing.

13. The system of claim 2, wherein said communication is received by said communication system in speech form, said system further comprising a speech-to-text module for converting said communication to text form prior to said translating, and a text-to-speech module for converting said communication to speech form after said translating.

14. The communication system of claim 1,3 or 5, further comprising a means for determining media-type for said communication.

15. The communication system of claim 1, wherein said language identification module is for automatically identifying multiple languages contained within a communication by comparing arbitrary segment of said communication to one or more language segments for a plurality of languages.

16. The communication system of claim 2, further comprising a means for identifying media-type for said communication and a media conversion module for converting media-type of said communication.

17. A language identification method for use by a communication system, comprising:
upon receipt of a communication, automatically comparing at least one arbitrary segment from said communication with one or more language segments of a plurality of languages; and
identifying said communication as being of a particular source language based on said comparing.

18. The method of claim 17 wherein said communication is in text format, and said method further comprises converting said communication from text format into speech format based on said source language.

19. The method of claim 17 wherein said communication is in speech format, and said method further comprises converting said communication from speech format into text format based on said source language.

20. The method of claim 17, further comprising translating said communication from said source language into at least one secondary language, wherein said translating is facilitated by accessing at least one language database.

21. The method of claim 20 wherein said communication is in text format, and said method further comprises converting said translated communication from text format into speech format.

22. The method of claim 20 wherein said communication is received in speech format, and said method further comprises converting said communication from speech format into text format based on said source language prior to said translating.

23. The method of any of claims 17 to 22, wherein said comparing is of an arbitrary segment from a communication received into an electronic multimedia system against language segments of a plurality of language databases to achieve a linguistic match; and wherein said identifying is of said communication and is for identifying said communication as being of a particular source language based on said comparing.

24. The method of claim 23, comprising accessing said converted communication via a telephony apparatus or a personal computer.

25. The method of claim 17, wherein said identifying includes scoring results of said comparing.

26. The method of any of claims 17 to 22, wherein said comparing is of an arbitrary segment from a message received into a messaging system against language segments of a plurality of language databases to achieve a linguistic match; and wherein said identifying is of said message and is for identifying said message as being of a particular source language based on said comparing.

27. The method of claim 26, comprising accessing said converted message via a telephony apparatus or a personal computer.

28. The method of claim 26, wherein said translation into said at least one secondary language is executed automatically based on a message recipient's preselected mailbox preferences specified within said messaging system for said recipient.

29. The method of claim 22, further comprising the step of converting said communication after said translating from text format into speech format.

30. The method of claim 26, wherein said message is received in a first media type and is converted into a second media type prior to said translating.

31. The method of claim 30, wherein said message is converted into a second media type after said translation for retrieval in said second media type.
